# EUROPEAN PATENT SPECIFICATION

(11) **EP 4 320 134 B1**
(45) Date of publication and mention of the grant of the patent: **11.06.2025**
(21) Application number: 22721657.9
(22) Date of filing: 06.04.2022
(51) Int. Cl.: C07F 9/40, C09K 21/12, D06M 13/12, D06M 13/292, D06M 13/322

(54) **A FIRE-RATED FINISHING PRODUCT SUITABLE FOR FABRIC APPLICATIONS**
FÜR STOFFANWENDUNGEN GEEIGNETES FEUERFESTES VEREDELUNGSPRODUKT
PRODUIT DE FINITION IGNIFUGÉ ADAPTÉ AUX APPLICATIONS TEXTILES

(30) Priority: 06.04.2021 EP 21167009
(43) Date of publication of application: 14.02.2024
(73) Proprietor: Archroma (Switzerland) GmbH, 4133 Pratteln (CH)
(72) Inventor: WEIHRATHER, Alfred Josef, 86462 Langweid am Lech (DE); BRAUN, Reinhold, 86462 Langweid am Lech (DE)
(74) Representative: Meissner Bolte Partnerschaft mbB
(86) International application number: PCT/EP2022/059129
(87) International publication number: WO 2022/214545

(56) References cited:
- US-A- 3 800 010

## Description

The present invention relates to a fire-rated finishing product suitable for fabric applications and to a process for processing cellulose-containing material with said fire-rated finishing product.

Cotton fiber is one of the most important natural fabric, which is widely used in people's daily life. Cotton fiber has a lot of advantages, in particular in terms of mechanical performances, biodegradability, gas permeability, dyeability and hydrophilicity. It is known that cotton fiber can be used in bedding, garment material, upholstery, such as carpet, cover for furniture, cushion, and so on.

However, cotton fabric has high burning rate, and this can seriously harm consumers. This drawback is currently alleviated by the application of flame-retardant chemicals onto the fabric.

It is essential that flame-retardant chemicals remain on the fabric after laundering and dry-cleaning operations.

Generally, the fixing rate of formaldehyde / phosphorus / nitrogen-containing retardant (e.g. Pyrovatex CP) in the presence of an added amount of formaldehyde-containing resin, when applied on fabrics, is between 50 and 60 %.

For example, US 3,579,532 relates to bis-phosphono-propionamide substituted ethylene glycols and imidazolidinones. It is provided phosphorus-containing products, which are obtained by reacting a starting material comprising phosphorus and nitrogen atoms with glyoxal, formaldehyde, urea and an etherifying agent. Unfortunately, the provided phosphorus-containing product, as disclosed in US 3,579,532, has a fixing rate of phosphorous on fabrics after wash-off process of about 55 % and high amount of phosphoric acid is used (around 25 g/L).

US 3 800 010 A refers to phosphonopropionic acid amide derivatives made by reacting the corresponding phosphonopropionic acid amide with the corresponding halogenoaldehyde.

The known flame-retardant chemicals contain or emit formaldehyde-containing phosphorus compounds, which are hazardous to the environment and to health.

For these reasons, there is a need to provide a fire-rated finishing product suitable for fabric applications, which does not harm the environment and health and which provides higher yield, while guaranteeing durability after laundering and dry-cleaning operations of the fabric.

It is an object of the present invention to overcome the aforementioned drawbacks by providing the following product having formula I: 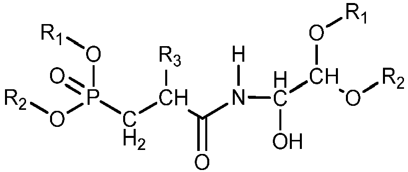
Wherein, R₁, R₂ are each a group equal to -CₙH₂ₙ₊₁,
wherein n ranges from 1 to 4, preferably equal to 1, and
wherein R₃ is H or methyl group.

With the compound (product) of formula I of the invention, formaldehyde is no longer needed (in the product or even during the process of impregnation of the product onto fabrics), which is highly advantageous.

The product of the invention is efficient in terms of flameproofing properties, when applied on fabric, and durability, since it remains on the fabric, even after several washing operations, and laundering and dry-cleaning operations.

The fixing rate is surprisingly high enough (up to 70 %) and the fixing step of the product on the fabric is also facilitated and greener for the environment, since less acid is needed. In other words, wastewater is less polluted by phosphorus, which makes the use of the product of the present invention attractive for the user.

Moreover, the use of formaldehyde-containing resin is no longer needed.

Preferably, the product of formula I of the present invention is obtainable (or obtained) by the following steps:
- Providing a phosphorus-containing compound having the following formula II: 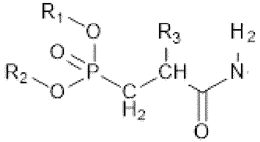
   Wherein, R₁, R₂ are each a group equal to -CₙH₂ₙ₊₁,
   wherein n ranges from 1 to 4, preferably equal to 1, and
   wherein R₃ is H or methyl group;
- Reacting the compound of said formula II with the following acetaldehyde compound having formula III:

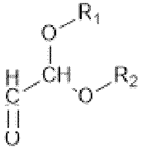

Wherein, R₁, R₂ are each a group equal to -CnH₂ₙ₊₁, wherein n ranges from 1 to 4, preferably equal to 1.

More preferably, said acetaldehyde compound is 2,2-dimethoxyacetaldehyde.

According to an advantageous embodiment of the invention, when said compound of formula III is reacted with said compound of formula II, the pH is adjusted to a value ranging from 7 to 10, preferably 8.5 to 9.

Advantageously, the yield of the reaction between said compounds of formula II and III is of at least 70 %, preferably at least 85 %, measured by HPLC.

More advantageously, the reaction between said compounds of formula II and III is carried out at a temperature ranging between 40 to 80 °C, preferably between 50 to 70 °C, more preferably at 60 °C.

In a preferred embodiment, the reaction between said compounds of formula II and III is carried out during a period of time ranging from 0.5 to 4 hours, preferably from 0.5 to 3 hours, most preferably from 0.5 to 2.5 hours. This is particularly cost-efficient.

In a particularly preferred embodiment, the reaction between said compounds of formula II and formula III is carried out at a mole ratio ranging from 0.7 to 1.3. With such selection of mole ratio, the yield of the reaction between compounds II and III is improved.

More preferably, the product of the invention is substantially free of any added amount of formaldehyde. This is particularly advantageous for the environment and health.

Even more preferably, formula II of the invention is obtained by applying the following steps:
- Reacting a compound having following formula IV: 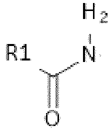 wherein, R₁ is a hydrocarbon chain which comprises at least one carbon-carbon-double bond, preferably the latter is an end group of R₁,
- with a compound having the following formula V: 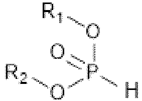 wherein, R₁, R₂ are each a group equal to -CₙH₂ₙ₊₁, wherein n ranges from 1 to 4, preferably equal to 1.

Other embodiments of the product as disclosed hereinabove are mentioned in the annexed claims.

The present invention also relates to a process for processing cellulose-containing material comprising the following steps:
- Mixing a product according to the present invention with an aqueous solution containing a catalyst, which comprises ammonium phosphate compound, or a mixture of catalysts in aqueous solution, which comprises ammonium phosphate compound and at least one pentavalent organic phosphorus compound,
- Applying the obtained composition on the cellulose-containing material and curing at a predetermined temperature.

Preferably, the ammonium phosphate compound is selected from the list comprising (or consisting of) ammonium phosphate, diammonium phosphate, monoammonium phosphate and mixtures thereof.

More preferably, said ammonium phosphate compound, preferably phosphoric acid, is present in an amount ranging from 1 to 20 g/L, preferably between 1 and 17 g/L, more preferably between 1 and 15 g/L, based on the total amount of said composition. This is particularly advantageous since low amount, lower than 20 g/L of ammonium phosphate compound, preferably phosphoric acid is used, meaning that less phosphorus is contained in wastewater, while keeping good results.

According to a particularly advantageous embodiment, the phosphorus fixing rate of said obtained composition onto the cellulose-containing material is of at least 65 %, preferably at least 70 %, preferably obtained without the presence of a resin containing formaldehyde.

One particularly preferred embodiment relates to the curing conditions when the obtained composition is applied onto cellulose-containing material (e.g. fabric). The predetermined temperature ranges between 150-170 °C or is preferably equal to about 160°C. Advantageously, the curing time ranges from 3 to 15 minutes, preferably 10 minutes.

According to an advantageous embodiment of the invention, the application of said obtained composition on said cellulose-containing material is carried out at a pH of above 3, preferably by foularding.

During the curing process the reactive hydroxy and acetal groups can react with the hydroxy groups of the cotton fiber. In addition to the product of the invention, an intermolecular crosslinking is also possible in combination with the ammonium salt formed during the process.

Other embodiments of the process of the invention as disclosed hereinabove are mentioned in the annexed claims.

Furthermore, the present invention also relates to a cellulose-containing material, which is obtained by the process of the invention, wherein said cellulose-containing material is substantially free of any added amount of formaldehyde.

Other embodiments of the cellulose-containing material as disclosed hereinabove are mentioned in the annexed claims.

The present invention relates to a (formaldehyde-free) flame retardant finishing product suitable for cellulose-containing materials, such as cotton or cotton blends (e.g., cotton / polyester and cotton / nylon), and durable to both laundering and dry-cleaning operations.

In the context of the present invention, the fire-rated finishing product can be provided in aqueous form when mixed with at least one wetting agent, a catalyst, preferably NH₄H₂PO₄, and ammonium phosphate compound, for instance phosphoric acid (e.g. 80 or 85%), advantageously diluted in water. The (aqueous) composition obtained may be applied to the textile fabric by conventional means, e.g. by foularding. The fabric is then squeezed to the desired take-up, dried and subjected to a dry-heat process at temperatures above 100° C (see pad -> dry-> cure). The pH of the aqueous composition of the present invention used to impregnate the fabric is preferably brought above 3.

The impregnation is preferably evenly carried out onto the fabric.

The cellulose-containing materials can be impregnated on a pad mangle. Adequate liquor pick-up is preferred (50 - 70 %, up to 90% on knit fabrics) and can be achieved by a combination of absorbent fabric and long contact of the goods with the liquor (padding speed / guide rollers).

Drying step can take place on stenter and can be carried out with maximum overfeed. The recommended drying temperature in the first zone is 110 °C; the temperature in the other zones should not be higher than 130 °C to minimize migration. The goods should, if possible, be processed in a partial vacuum (air extraction).

Curing can be carried out in a curing oven 5 minutes at 150 °C. In the case of curing on stenter, a period of time between 45 to 60 sec. at 170 °C is sufficient.

According to a preferred embodiment, the impregnated goods can be washed off after curing, preferably within 24 h. Soda ash or caustic soda is added to the washing bath to neutralize the goods and to make the goods alkaline and therefore reduce hydrolysis of the finish during storage of the finished goods.

In order to achieve continuous neutralization, the goods can remain in the alkaline bath for at least 2 min. After neutralizing and rinsing, they should be slightly alkaline and have a pH of 8 - 9.

With the fire-rated finishing product of the present invention, the flameproofing properties can remain over time on the fabric, even after several washing operations, and laundering and dry-cleaning operations, making said product durable enough.

In the meaning of the present invention, the wording "being substantially free of any added amount of formaldehyde" should be understood as the given object containing less than 0.1 weight %, preferably less than 0.01 weight %, more preferably less than 0.001 weight % of formaldehyde, based on the total weight % of the given object.

In the context of the invention, the HPLC / UV is carried out with Perkin Elmer Series 200 with an analytical balance AT 201 (Mettler-Toledo).

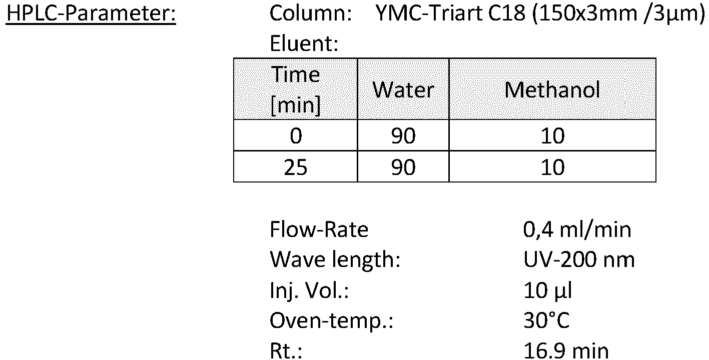

Sample preparation is as follows:
Weigh in about 0,1 g (Albegal B^{®}, amphoteric leveling agent) of the test item into a 100 ml flask and fill up with water to the mark. 10 µl of the solution was injected and analysed by HPLC/UV.
UV detection: 210 nm.

### Example 1

In a reaction vessel 308.8 g (2.75 mol) dimethyl phosphonate and 8 g sodium methylate (30%) were stirred and heated to 45°C. Then, 181.44 g (2.55 mol) of acrylamide were added at this temperature and dissolved under stirring. In addition, 36.5 g of a 30% strength solution of sodium methylate in methanol were slowly added dropwise in the course of 3 hours. During this period of 3 hours, the temperature in the reaction mixture was increased to 70°C. When the reaction was complete, the methanol was distilled off.

After the distillation had ended, the mixture was cooled to 60°C.

487.2 g (2,81 mol) 2,2-dimethoxyacetaldehyde (60%) were added under stirring. The pH was adjusted to a value between 7.5 and 9.5 (ideally pH 9.0) with potassium carbonate (50%) and held for two hours at 60°C.

Yield of addition product: approx. 85% (HPLC).

Steps 1 and 2 illustrated below show the synthesis steps, leading to the formation of the fire-rated finishing product of the present invention.

### Step 1:

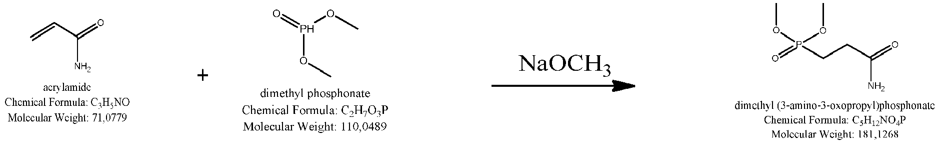

### Step 2:

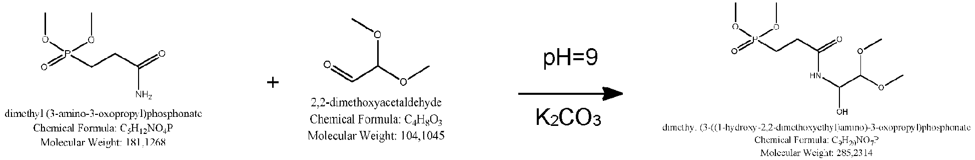

### Example 2

The fire-rated finishing product of example 1 is applied onto a cotton fabric in the presence of a wetting agent, for instance INVADINE^{®} PBN wetting agent from Huntsman, and a (mixture) of catalyst(s): NH₄H₂PO₄ and/or phosphoric acid (85 %), as illustrated in tables 1 and 2 below. Sample 6 - the reference - corresponds to an embodiment of the state of the art.

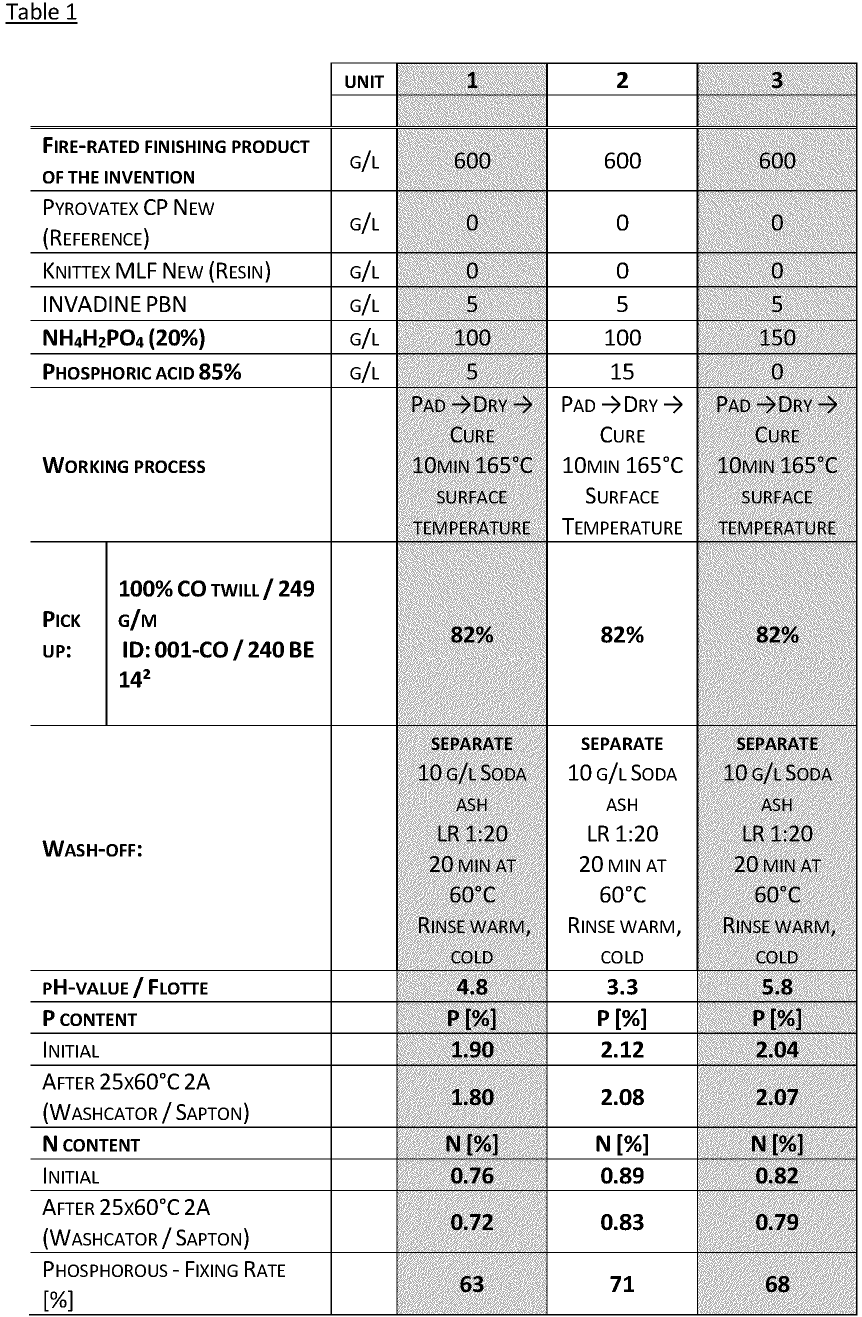

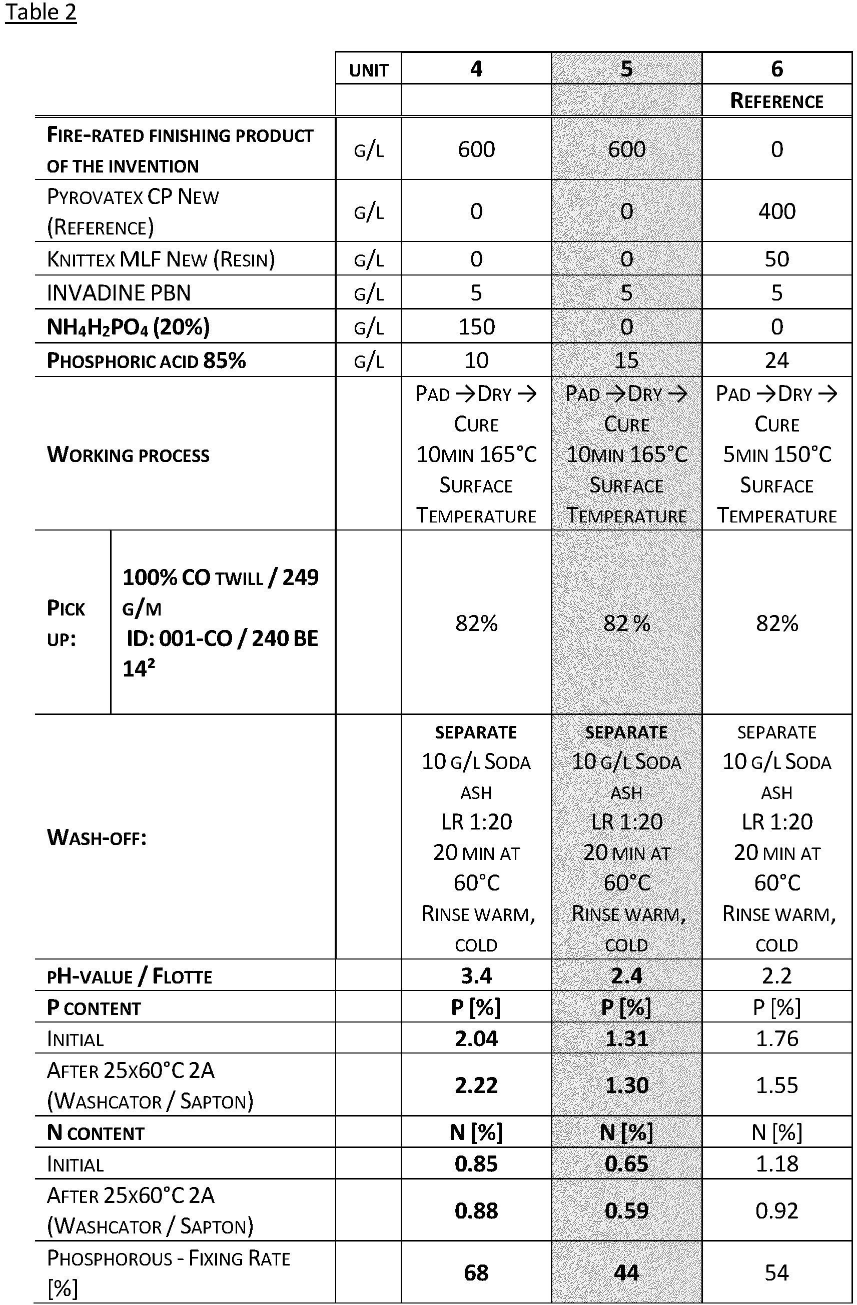

The working process mentioned in the tables above requires a temperature at the surface of 165°C, which can be obtained by using, for example Mathis air circulation from Mathis AG company.
Pick up data relates to 100 g of dry fabric pick up 82 g of the application fleet.

Table 3 below illustrates the edge ignition burning test according to EN ISO 15025 of the above samples.

**Table 3**

| **Burning behavior EN ISO 15025** | | | | | | |
|---|---|---|---|---|---|---|
| | **Edge ignition** | | | **Edge ignition** | | |
| **Sample 1** | **Initial** | **warp** | **weft** | **25x60° C** | **warp** | **weft** |
| FAT | | 10 sec | | | 10 sec | |
| AFT | | 0 | 0 | | 0 | 0 |
| AGT | | 0 | 0 | | 0 | 0 |
| DL | | 105 | 95 | | 95 | 95 |

| **Sample 2** | **Initial** | **warp** | **weft** | **25x60° C** | **warp** | **weft** |
|---|---|---|---|---|---|---|
| FAT | | 10 sec | | | 10 sec | |
| AFT | | 0 | 0 | | 0 | 0 |
| AGT | | 0 | 0 | | 0 | 0 |
| DL | | 95 | 100 | | 90 | 95 |

| **Sample 3** | **Initial** | **warp** | **weft** | **25x60° C** | **warp** | **weft** |
|---|---|---|---|---|---|---|
| FAT | | 10 sec | | | 10 sec | |
| AFT | | 0 | 0 | | 0 | 0 |
| AGT | | 0 | 0 | | 0 | 0 |
| DL | | 100 | 95 | | 105 | 105 |

| **Sample 4** | **Initial** | **warp** | **weft** | **25x60° C** | **warp** | **weft** |
|---|---|---|---|---|---|---|
| FAT | | 10 sec | | | 10 sec | |
| AFT | | 0 | 0 | | 0 | 0 |
| AGT | | 0 | 0 | | 0 | 0 |
| DL | | 100 | 90 | | 95 | 95 |

| **Sample 5** | **Initial** | **warp** | **weft** | **25x60° C** | **warp** | **weft** |
|---|---|---|---|---|---|---|
| FAT | | 10 sec | | | 10 sec | |
| AFT | | 8 | 7 | | 8 | 7 |
| AGT | | | | | | |
| DL | | Fully damaged | Fully damaged | | Fully damaged | Fully damaged |

| **Sample 6** | **Initial** | **warp** | **weft** | **25x60° C** | **warp** | **weft** |
|---|---|---|---|---|---|---|
| FAT | | 10 sec | | | 10 sec | |
| AFT | | 0 | 0 | | 0 | 0 |
| AGT | | 0 | 0 | | 0 | 0 |
| DL | | 110 | 100 | | 100 | 110 |

| | | | | | | |
|---|---|---|---|---|---|---|
| FAT = flame application time AFT = after flame time (second) DL = damaged length (mm) sec. = seconds | | | | | | |

The fixing rate can be calculated as follows:
100 g cotton textile pick up 82 g (= 42 g solid = 4,3 g P) of the aqueous preparation. Fixing rate = P-content (after wash-off process) * 100 / P-content (before wash-off process).

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

As used herein, the singular forms "a", "an", and "the" include both singular and plural referents unless the context clearly dictates otherwise. By way of example, "an isocyanate group" means one isocyanate group or more than one isocyanate group.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of". This means that, preferably, the aforementioned terms, such as "comprising", "comprises", "comprised of", "containing", "contains", "contained of", can be replaced by "consisting", "consisting of", "consists".

Throughout this application, the term "about" is used to indicate that a value includes the standard deviation of error for the device or method being employed to determine the value.

As used herein, the terms "% by weight", "wt%", "weight percentage", or "percentage by weight" are used interchangeably.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 30 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

Throughout this application, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

## Claims

1. A fire-rated finishing product suitable for fabric applications of the following formula I: 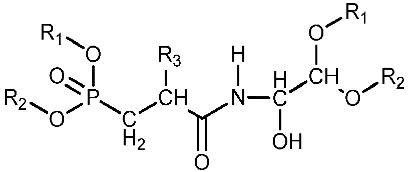
Wherein, R₁, R₂ are each a group equal to -CₙH₂ₙ₊₁,
wherein n ranges from 1 to 4, preferably equal to 1, and
wherein R₃ is H or methyl group.

2. The product according to claim 1, obtainable by the following steps:
- Providing a phosphorus-containing compound having the following formula II: 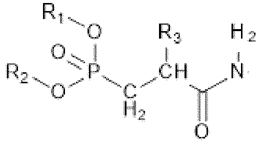
Wherein, R₁, R₂ are each a group equal to -CₙH₂ₙ₊₁,
wherein n ranges from 1 to 4, preferably equal to 1, and
wherein R₃ is H or methyl group;
- Reacting the compound of said formula II with the following acetaldehyde compound having formula III: 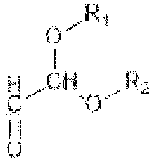 Wherein, R₁, R₂ are each a group equal to -CₙH₂ₙ₊₁, wherein n ranges from 1 to 4, preferably equal to 1.

3. The product according to claim 2, wherein said acetaldehyde compound is 2,2-dimethoxyacetaldehyde.

4. The product according to claim 2 or 3, wherein, when said compound of formula III is reacted with said compound of formula II, the pH is adjusted to a value ranging from 7 to 10, preferably 8.5 to 9.

5. The product according to any one of claims 2 to 4, wherein the yield of the reaction between said compounds of formula II and III is of at least 70 %, preferably at least 85 %, measured by HPLC.

6. The product according to any one of claims 2 to 5, wherein the reaction between said compounds of formula II and III is carried out at a temperature ranging between 40 to 80 °C, preferably between 50 to 70 °C, more preferably at 60 °C.

7. The product according to any one of claims 2 to 6, wherein the reaction between said compounds of formula II and III is carried out during a period of time ranging from 0.5 to 4 hours, preferably from 0.5 to 3 hours, most preferably from 0.5 to 2.5 hours.

8. The product according to any one of claims 2 to 7, wherein the reaction between said compounds of formula II and formula III is carried out at a mole ratio ranging from 0.7 to 1.3.

9. The product according to any one of claims 2 to 8, containing less than 0.1 weight % of any added amount of formaldehyde based on the total weight % of the product.

10. The product according to any one of claims 2 to 9, wherein formula II is obtained by applying the following steps:
- Reacting a compound having following formula IV: 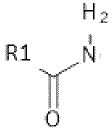 wherein, R₁ is a hydrocarbon chain which comprises at least one carbon-carbon-double bond, preferably the latter is an end group of R1,
- with a compound having the following formula V: 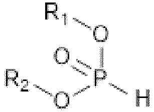 wherein, R₁, R₂ are each a group equal to -CₙH₂ₙ₊₁, wherein n ranges from 1 to 4, preferably equal to 1.

11. A process for processing cellulose-containing material comprising the following steps:
- Mixing a product according to any one of the preceding claims with an aqueous solution containing a catalyst, which comprises ammonium phosphate compound, or a mixture of catalysts in aqueous solution, which comprises ammonium phosphate compound and at least one pentavalent organic phosphorus compound,
- Applying the obtained composition on the cellulose-containing material and curing at a predetermined temperature.

12. The process according to claim 11, wherein the ammonium phosphate compound is selected from the list comprising ammonium phosphate, diammonium phosphate, monoammonium phosphate and mixtures thereof.

13. The process according to claim 11 or 12, wherein said ammonium phosphate compound, preferably phosphoric acid, is present in an amount ranging from 1 to 20 g/L, preferably between 1 and 17 g/L, more preferably between 1 and 15 g/L, based on the total amount of said composition.

14. The process according to any one of claims 11 to 13, wherein the phosphorus fixing rate of said obtained composition onto the cellulose-containing material is of at least 65 %, preferably at least 70 %, preferably obtained without the presence of a resin.

15. The process according to any one of claims 11 to 14, wherein the application of said obtained composition on said cellulose-containing material is carried out at a pH of above 3, preferably by foularding.

16. Cellulose-containing material obtained by the process according to any one of claims 11 to 15, wherein said cellulose-containing material contains less than 0.1 weight % of any added amount of formaldehyde based on the total weight % of the cellulose-containing material.

## Patentansprüche

1. Feuerfestes Veredlungsprodukt, geeignet für Gewebeanwendungen, der folgenden Formel I: 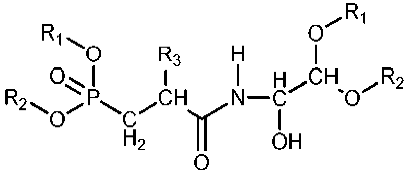
worin R₁, R₂ jeweils eine Gruppe gleich -CₙH₂ₙ₊₁ sind,
worin n im Bereich von 1 bis 4 liegt, vorzugsweise gleich 1 ist, und
worin R₃ H oder eine Methylgruppe ist.

2. Produkt nach Anspruch 1, erhaltbar durch die folgenden Schritte:
- Bereitstellen einer phosphorhaltigen Verbindung mit der folgenden Formel II: 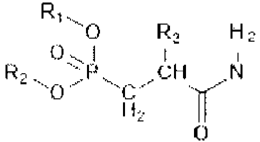
worin R₁, R₂ jeweils eine Gruppe gleich -CₙH₂ₙ₊₁ sind,
worin n im Bereich von 1 bis 4 liegt, vorzugsweise gleich 1 ist, und
worin R₃ H oder eine Methylgruppe ist,
- Umsetzen der Verbindung der Formel II mit der folgenden Acetaldehydverbindung der Formel III: 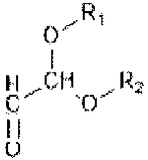 worin R₁, R₂ jeweils eine Gruppe gleich -CₙH₂ₙ₊₁ sind, worin n im Bereich von 1 bis 4 liegt, vorzugsweise gleich 1 ist.

3. Produkt nach Anspruch 2, wobei die Acetaldehydverbindung 2,2-Dimethoxyacetaldehyd ist.

4. Produkt nach Anspruch 2 oder 3, wobei der pH-Wert, wenn die Verbindung der Formel III mit der Verbindung der Formel II umgesetzt wird, auf einen Wert im Bereich von 7 bis 10, vorzugsweise 8,5 bis 9 eingestellt wird.

5. Produkt nach einem der Ansprüche 2 bis 4, wobei die Ausbeute der Reaktion zwischen den Verbindungen der Formel II und III mindestens 70 %, vorzugsweise mindestens 85 % beträgt, gemessen mittels HPLC.

6. Produkt nach einem der Ansprüche 2 bis 5, wobei die Reaktion zwischen den Verbindungen der Formel II und III bei einer Temperatur zwischen 40 und 80 °C, vorzugsweise zwischen 50 und 70 °C, mehr bevorzugt bei 60 °C durchgeführt wird.

7. Produkt nach einem der Ansprüche 2 bis 6, wobei die Reaktion zwischen den Verbindungen der Formel II und III über einen Zeitraum von 0,5 bis 4 Stunden, vorzugsweise von 0,5 bis 3 Stunden, am meisten bevorzugt von 0,5 bis 2,5 Stunden durchgeführt wird.

8. Produkt nach einem der Ansprüche 2 bis 7, wobei die Reaktion zwischen den Verbindungen der Formel II und III bei einem Molverhältnis von 0,7 bis 1,3 durchgeführt wird.

9. Produkt nach einem der Ansprüche 2 bis 8, enthaltend weniger als 0,1 Gew.-% jeglicher zugesetzten Menge an Formaldehyd, basierend auf den gesamten Gew.-% des Produkts.

10. Produkt nach einem der Ansprüche 2 bis 9, wobei die Formel II durch Anwenden der folgenden Schritte erhalten wird:
- Umsetzen einer Verbindung mit der folgenden Formel IV: 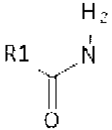 worin R₁ eine Kohlenwasserstoffkette ist, die mindestens eine Kohlenstoff-Kohlenstoff-Doppelbindung umfasst, wobei Letztere vorzugsweise eine Endgruppe von R1 ist,
- mit einer Verbindung mit der folgenden Formel V: 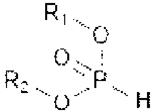 worin R₁, R₂ jeweils eine Gruppe gleich -CₙH₂ₙ₊₁ sind, worin n im Bereich von 1 bis 4 liegt, vorzugsweise gleich 1 ist.

11. Verfahren zur Verarbeitung von cellulosehaltigem Material, umfassend die folgenden Schritte:
- Mischen eines Produkts nach einem der vorstehenden Ansprüche mit einer wässrigen Lösung, die einen Katalysator enthält, der eine Ammoniumphosphatverbindung umfasst, oder mit einer Mischung von Katalysatoren in wässriger Lösung, die eine Ammoniumphosphatverbindung und mindestens eine fünfwertige organische Phosphorverbindung umfasst,
- Auftragen der erhaltenen Zusammensetzung auf das cellulosehaltige Material und Aushärten bei einer vorgegebenen Temperatur.

12. Verfahren nach Anspruch 11, wobei die Ammoniumphosphatverbindung aus der Liste, umfassend Ammoniumphosphat, Diammoniumphosphat, Monoammoniumphosphat und Mischungen davon, ausgewählt ist.

13. Verfahren nach Anspruch 11 oder 12, wobei die Ammoniumphosphatverbindung, vorzugsweise Phosphorsäure, in einer Menge im Bereich von 1 bis 20 g/l, vorzugsweise zwischen 1 und 17 g/l, mehr bevorzugt zwischen 1 und 15 g/l vorhanden ist, basierend auf der Gesamtmenge der Zusammensetzung.

14. Verfahren nach einem der Ansprüche 11 bis 13, wobei die Phosphorfixierungsrate der erhaltenen Zusammensetzung auf dem cellulosehaltigen Material mindestens 65 %, vorzugsweise mindestens 70 % beträgt, und vorzugsweise ohne Anwesenheit eines Harzes erhalten wird.

15. Verfahren nach einem der Ansprüche 11 bis 14, wobei das Auftragen der erhaltenen Zusammensetzung auf das cellulosehaltige Material bei einem pH-Wert von über 3 durchgeführt wird, vorzugsweise durch Foulardieren.

16. Cellulosehaltiges Material, erhalten durch das Verfahren nach einem der Ansprüche 11 bis 15, wobei das cellulosehaltige Material weniger als 0,1 Gew.-% jeglicher zugesetzten Menge an Formaldehyd enthält, basierend auf den gesamten Gew.-% des cellulosehaltigen Materials.

## Revendications

1. Produit de finition ignifuge approprié pour des applications sur tissu de formule I suivante : 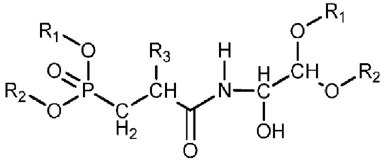
dans lequel, R₁, R₂ sont chacun un groupe égal à -CₙH₂ₙ₊₁,
dans lequel n va de 1 à 4, de préférence est égal à 1, et
dans lequel R₃ est H ou un groupe méthyle.

2. Produit selon la revendication 1, pouvant être obtenu par les étapes suivantes :
- la fourniture d'un composé contenant du phosphore ayant la formule II suivante : 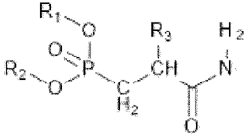
dans lequel, R₁, R₂ sont chacun un groupe égal à -CₙH₂ₙ₊₁,
dans lequel n va de 1 à 4, de préférence est égal à 1, et
dans lequel R₃ est H ou un groupe méthyle ;
- la réaction du composé de ladite formule II avec le composé d'acétaldéhyde suivant ayant la formule III : 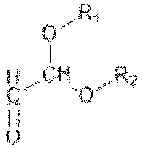
dans lequel, R₁, R₂ sont chacun un groupe égal à -CₙH₂ₙ₊₁,
dans lequel n va de 1 à 4, de préférence est égal à 1**.**

3. Produit selon la revendication 2, dans lequel ledit composé d'acétaldéhyde est le 2,2-diméthoxyacétaldéhyde.

4. Produit selon la revendication 2 ou 3, dans lequel, lorsque ledit composé de formule III réagit avec ledit composé de formule II, le pH est ajusté à une valeur allant de 7 à 10, de préférence de 8,5 à 9.

5. Produit selon l'une quelconque des revendications 2 à 4, dans lequel le rendement de la réaction entre lesdits composés de formule II et de formule III est d'au moins 70 %, de préférence d'au moins 85 %, mesuré par CLHP.

6. Produit selon l'une quelconque des revendications 2 à **5,** dans lequel la réaction entre lesdits composés de formule II et de formule III est réalisée à une température entre 40 et 80 °C, de préférence entre 50 et 70 °C, de manière davantage préférée à 60 °C.

7. Produit selon l'une quelconque des revendications 2 à **6,** dans lequel la réaction entre lesdits composés de formule II et de formule III est réalisée pendant une période de temps allant de 0,5 à 4 heures, de préférence de 0,5 à 3 heures, de manière préférée entre toutes de 0,5 à 2,5 heures.

8. Produit selon l'une quelconque des revendications 2 à 7, dans lequel la réaction entre lesdits composés de formule II et de formule III est réalisée à un rapport molaire allant de 0,7 à 1,3.

9. Produit selon l'une quelconque des revendications 2 à 8, contenant moins de 0,1 % en poids de toute quantité ajoutée de formaldéhyde sur la base du % en poids total du produit.

10. Produit selon l'une quelconque des revendications 2 à 9, dans lequel la formule II est obtenue en appliquant les étapes suivantes :
- la réaction d'un composé ayant la formule IV suivante : 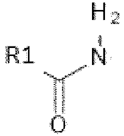 dans lequel, R₁ est une chaîne hydrocarbonée qui comprend au moins une double liaison carbone-carbone, de préférence cette dernière est un groupe terminal de R₁,
- avec un composé ayant la formule V suivante : 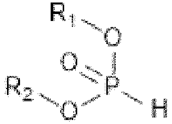 dans lequel, R₁, R₂ sont chacun un groupe égal à -CₙH₂ₙ₊₁, dans lequel n va de 1 à 4, de préférence est égal à 1.

11. Procédé de traitement d'un matériau contenant de la cellulose comprenant les étapes suivantes :
- le mélange d'un produit selon l'une quelconque des revendications précédentes avec une solution aqueuse contenant un catalyseur, qui comprend un composé de phosphate d'ammonium, ou un mélange de catalyseurs en solution aqueuse, qui comprend un composé de phosphate d'ammonium et au moins un composé de phosphore organique pentavalent,
- l'application de la composition obtenue sur le matériau contenant de la cellulose et un durcissement à une température prédéterminée.

12. Procédé selon la revendication 11, dans lequel le composé de phosphate d'ammonium est sélectionné dans la liste comprenant le phosphate d'ammonium, le phosphate de diammonium, le phosphate de monoammonium et les mélanges de ceux-ci.

13. Procédé selon la revendication 11 ou 12, dans lequel ledit composé de phosphate d'ammonium, de préférence l'acide phosphorique, est présent en une quantité allant de 1 à 20 g/l, de préférence entre 1 et 17 g/l, de manière davantage préférée entre 1 et 15 g/l, sur la base de la quantité totale de ladite composition.

14. Procédé selon l'une quelconque des revendications 11 à 13, dans lequel le taux de fixation du phosphore de ladite composition obtenue sur le matériau contenant de la cellulose est d'au moins 65 %, de préférence d'au moins 70 %, de préférence obtenu sans la présence d'une résine.

15. Procédé selon l'une quelconque des revendications 11 à 14, dans lequel l'application de ladite composition obtenue sur ledit matériau contenant de la cellulose est effectuée à un pH supérieur à 3, de préférence par foulardage.

16. Matériau contenant de la cellulose obtenu par le procédé selon l'une quelconque des revendications 11 à 15, dans lequel ledit matériau contenant de la cellulose contient moins de 0,1 % en poids de toute quantité ajoutée de formaldéhyde sur la base du % en poids total du matériau contenant de la cellulose.
